Europäisches Patentamt

European Patent Office

Office européen des brevets

(11) Numéro de publication: **0 461 323 A1**

# DEMANDE DE BREVET EUROPEEN

(21) Numéro de dépôt: 90401666.4

(22) Date de dépôt: 15.06.90

(51) Int. Cl.5: **B60D 1/00**, B60D 1/32, B62K 27/12

(43) Date de publication de la demande:
18.12.91 Bulletin 91/51

(84) Etats contractants désignés:
AT BE CH DE DK ES FR GB GR IT LI LU NL SE

(71) Demandeur: **Hervier, Christian**
**13, rue Valette**
**F-75005 Paris(FR)**

(72) Inventeur: **Hervier, Christian**
**13, rue Valette**
**F-75005 Paris(FR)**

(54) **Attelage de remorques lourdes pour véhicules à deux roues.**

(57) L'invention concerne un attelage pour véhicules à deux roues permettant de tracter des remorques lourdes tout en gardant un contrôle de conduite satisfaisant.

Il est constitué d'un corps en tôle emboutie (1) pratiquement tangeant au pneu arrière (2) et fixé au garde boue arrière (3) avec à l'intérieur, une boule d'attelage (5) sur laquelle vient s'articuler la flèche de la remorque (6). Deux tubes (7) soudés au corps en tôle emboutie sont boulonnés de part et d'autre du repose pieds (8). Le positionnement très près du sol du point central d'articulation (moins de 20 cm) et très près de la bande de roulement du pneu arrière (2) (moins de 6 cm) permet au deux roues de tracter des remorques lourdes en concervant un bon contrôle de la conduite.

Le dispositif selon l'invention est particulièrement destiné à permettre à des véhicules à deux roues de tracter des remorques lourdes.

FIG. 1

La présente invention concerne un attelage de remorques pour véhicules à deux roues.

Les dispositifs utilisés comportent généralement une boule ou un anneau d'attelage se trouvant; -soit sur le porte bagage au dessus de la roue ; -soit après le garde boue au dessus ou en dessous du feu d'éclairage arrière. Ces dispositifs ne permettent pas une bonne maniabilité de l'ensemble et ne sont utilisés que marginalement, pour des remorques très légères.

Le dispositif selon l'invention permet de limiter l'incidence sur le deux roues tracteur des efforts latéraux et verticaux de la flèche de la remorque et par conséquent, autorise la traction de remorques plus lourdes ou plus larges et permet un meilleur contrôle de la conduite. Le dispositif comporte en effet une boule, un anneau d'attelage ou autre, se situant très près du sol, et très près de la bande de roulement du pneu arrière du deux roues tracteur. Le point central d'articulation de la flèche de la remorque avec l'attelage du deux roues tracteur se trouvant au maximum à 20 cm du sol et à 6 cm de la bande de roulement du pneu arrière du deux roues tracteur.

Selon des modes particuliers de réalisation :
- Pour les deux roues classiques ; l'attelage peut être fixé au bras suspendu de la roue arrière, ou au cadre par les points les plus adaptés à une bonne rigidité.
- Pour les deux roues de type scooter ; l'attelage peut être fixé, d'une part à l'extrême bord arrière du garde boue par un corps en tôle emboutie ou toutes autres pattes de fixations, et, d'autre part, respectivement de chaque côté du repose pieds par deux bras passant respectivement l'un sous le moteur, l'autre sous l'éventuelle roue de secours. L'attelage peut être également solidaire du groupe moto-propulseur suspendu pour permettre de ne pas diminuer sa faible garde au sol lors de l'écrasement de la suspension.
- Un amortisseur peut venir réguler les efforts latéraux de la flèche sur l'attelage et les reporter plus en avant sur le deux roues.

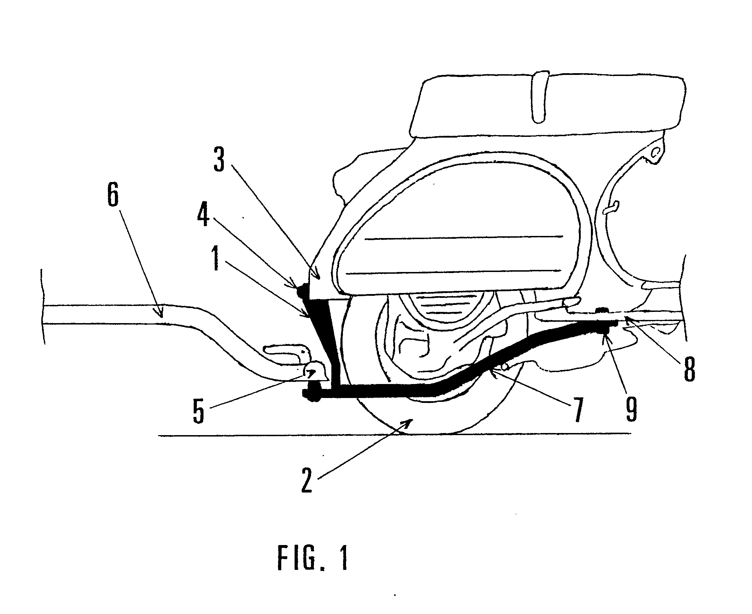

La figure unique représente, à titre d'exemple non limitatif, une vue de côté du dispositif adapté à un deux roues de type scooter, dans une version non solidaire du groupe moto-propulseur, et permet d'illustrer le positionnement particulier du point central d'articulation de l'attelage à la flèche par rapport au sol et à la roue arrière du deux roues tracteur.

En référence à ce dessin, le dispositif comporte un corps en tôle emboutie(1) pratiquement tangeant au pneu arrière (2) et fixé au garde boue arrière (3) par des boulons (4) avec, à l'intérieur, le plus au fond, et le plus bas possible, une boule d'attelage (5) sur laquelle vient s'articuler la flèche de la remorque (6).

Le corps en tôle emboutie est soudé à deux tubes (7) qui longent, d'une part le dessous du moteur en position non chargée du scooter, et d'autre part le dessous de la roue de secours et viennent se fixer sous le repose pieds (8) par des pattes boulonnées (9).

Le dispositif selon l'invention est particulièrement destiné à permettre à des véhicules à deux roues de tracter des remorques lourdes.

**Revendications**

1. Dispositif d'attelage de remorques pour véhicules à deux roues caractérisé par le fait que le point central d'articulation de la flèche de la remorque (5) se trouve très près du sol, et très près de la bande de roulement du pneu arrière (2) du deux roues tracteur.

2. Dispositif selon la revendication 1 caractérisé en ce que le point central d'articulation de la flèche de la remorque (5) sur l'attelage se trouve à moins de 20 cm du sol en cours de fonctionnement de l'ensemble.

3. Dispositif selon la revendication 1 ou la revendication 2 caractérisé en ce que le point central d'articulation de la flèche de la remorque (5) sur l'attelage se trouve à moins de 6 cm de la bande de roulement du pneu de la roue arrière (2) du deux roues tracteur.

4. Dispositif selon l'une quelconque des revendications précédentes caractérisé en ce qu'il est solidaire du cadre du deux roues tracteur par quelque point d'ancrage que ce soit.

5. Dispositif selon l'une quelconque des revendications précédentes caractérisé en ce qu'il est solidaire d'un bras de suspension arrière ou d'un groupe moto-propulseur suspendu.

6. Dispositif selon l'une quelconque des revendications précédentes caractérisé en ce qu'un amortisseur réunit la flèche de la remorque (6) à l'attelage.

FIG. 1

**Office européen
des brevets**

## RAPPORT DE RECHERCHE
## EUROPEENNE

Numéro de la demande

**EP 90 40 1666**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-3 734 536   (DEVER)<br>* Colonne 3, lignes 7-27; figure 1 * | 1,4 | B 60 D 1/00<br>B 60 D 1/32 |
| A | | 2,3 | B 62 K 27/12 |
| A | EP-A-0 010 933   (TURNER)<br>* Page 2, lignes 11-22; page 4, ligne 23 - page 5, ligne 12; figure 1 * | 1,5 | |
| A | FR-A-2 282 348   (FTF)<br>* Page 4, lignes 10-35; figure 4 * | 6 | |
| A | US-A-4 610 457   (HARMON)<br>* Figure 1 * | 1,5 | |

DOMAINES TECHNIQUES
RECHERCHES (Int. Cl.5)

B 60 D
B 62 K

Le présent rapport de recherche a été établi pour toutes les revendications

| Lieu de la recherche | Date d'achèvement de la recherche | Examinateur |
|---|---|---|
| La Haye | 14 février 91 | BRUNELLO B. |